# EUROPÄISCHE PATENTSCHRIFT

(11) **EP 3 951 271 B1**
(45) Veröffentlichungstag und Bekanntmachung des Hinweises auf die Patenterteilung: **03.09.2025**
(21) Anmeldenummer: 21182437.0
(22) Anmeldetag: 29.06.2021
(51) Int. Cl.: F24D 17/00, F24D 19/10, E03B 7/04, E03B 7/07, E03B 7/09, F03C 2/08, F04C 2/14, F04C 15/00, F03B 17/06, F04C 11/00

(54) **TRINK- UND BRAUCHWASSERSYSTEM**
DRINKING AND DOMESTIC WATER SYSTEM
SYSTÈME D'EAU POTABLE ET D'EAU SANITAIRE

(30) Priorität: 15.07.2020 DE 202020104087 U
(43) Veröffentlichungstag der Anmeldung: 09.02.2022
(73) Patentinhaber: Gebr. Kemper GmbH + Co. KG, 57462 Olpe (DE)
(72) Erfinder: Blumenthal, Roland, 50374 Erftstadt (DE)
(74) Vertreter: Grünecker Patent- und Rechtsanwälte PartG mbB

(56) Entgegenhaltungen:
- EP-A2- 2 365 141
- EP-A2- 2 876 376
- WO-A1-03/102420
- DE-A1- 102017 101 532
- DE-C1- 4 202 445
- DE-U1- 202018 002 062

## Beschreibung

Die vorliegende Erfindung betrifft ein Trink- und Brauchwassersystem mit den oberbegrifflichen Merkmalen von Anspruch 1. Ein solches Trink- und Brauchwassersystem ist aus DE 10 2017 101 532 A1 bekannt. Ein Trink- und Brauchwassersystem mit einem Anschluss an das öffentliche Wasserversorgungsnetz, mindestens einer Verteilungsleitung und einer in einer Wohneinheit vorgesehenen Versorgungsleitung, an die mindestens ein Verbraucher angeschlossen ist, die über einen Wasserzähler mit der Verteilungsleitung kommuniziert und in der mittels einer mit der Versorgungsleitung verbundenen Wohneinheit-Zirkulationsleitung Wasser in der Wohneinheit zirkuliert, ist für Trinkwarmwasser aus EP 2 876 376 A2 bekannt. Die vorliegende Erfindung betrifft insbesondere eine Trinkwasser-Installation nach § 3 Abs. 3 der Trinkwasserverordnung - TrinkwV 2001.

Im Stand der Technik für Trinkwarmwasser gemäß EP 2 876 376 A2 ist neben einer zentralen Gebäude-Zirkulationspumpe zur Zirkulation des Wassers in der Verteilungsleitung auch eine Wohneinheit-Zirkulationspumpe zur Zirkulation des Wassers in der Versorgungsleitung vorgesehen. Das Wasser der Verteilungsleitung wird durch die zentrale Gebäude-Zirkulationspumpe einer Wärmeübertragungseinrichtung rückgeführt, in welcher Warmwasser durch Zufuhr von Wärme auf einer Mindesttemperatur gehalten wird. Die Versorgungsleitung der Wohneinheit ist durch einen Wärmeübertrager thermisch mit der Verteilungsleitung gekoppelt. Die Wohneinheit-Zirkulationspumpe pumpt das Wasser der Versorgungsleitung durch eine Sekundärseite des Wärmeübertragers. Dort wird es von dem durch die Primärseite des Wärmeübertragers fließenden Wasser der Verteilungsleitung erwärmt, das durch die Gebäude-Zirkulationspumpe in Zirkulation gehalten wird. Ein Wasserzähler verbindet den primärseitigen Eingang des Wärmeübertragers mit dem sekundärseitigen Ausgang fluidisch. Durch diese Anordnung ist sichergestellt, dass durch den Wasserzähler nur dann Wasser fließt, wenn in der Wohneinheit eine Wasserentnahme stattfindet. Die Wassermenge, die auf beiden Seiten durch den Wärmeübertrager fließt und nur zur Aufrechterhaltung der Wassertemperatur dient, wird korrekterweise nicht gezählt.

Ein wesentlicher Nachteil im Stand der Technik für Trinkwarmwasser ist, dass bei Nichtnutzung der Wohnung zwar das Trinkwarmwasser dort auf einer korrekten Temperatur gehalten wird, ein Wasseraustausch aber nicht stattfindet. Um Stagnation zu vermeiden kann der beschriebene Stand der Technik für Trinkwarmwasser durch Spülvorrichtungen ergänzt werden, wie sie aus dem Stand der Technik für Kaltwasser bekannt sind. Im Stand der Technik für Trinkkaltwasser in Gebäuden mit mehreren Wohneinheiten wird in jeder Wohneinheit zur Stagnationsvermeidung und zur Vermeidung unzulässig hoher Temperaturen eine Spülvorrichtung vorgesehen. Diese dient dazu, Wasser, das zu lange in einer Leitung gestanden hat oder Wasser, das zu warm ist, auszuspülen. Ein Trink- und Brauchwassersystem für Trinkwarmwasser mit solchen Spülvorrichtungen erhöht jedoch den Verbrauch von warmem Trinkwasser; d.h. mit dem ausgespülten Trinkwarmwasser verlässt nicht nur Wasser, sondern auch die zur Erwärmung des Trinkwarmwassers benutzte Energie das System.

Ein weiterer Nachteil im Stand der Technik für Trinkwarmwasser ist, dass die Wohneinheit-Zirkulationspumpe mit elektrischer Energie versorgt werden muss und dass am Installationsort der Wohneinheit-Zirkulationspumpe üblicherweise kein Stromanschluss vorhanden ist. Die Wohneinheit-Zirkulationspumpe wird in der Regel dort installiert, wo für gewöhnlich der Wasserzähler der Wohneinheit installiert ist.

Weiterhin nachteilig ist die Lösung im Stand der Technik für Trinkwarmwasser, da sie aufgrund des fehlenden Wasseraustausches zur Bereitstellung von Trinkkaltwasser ungeeignet ist bzw. bei Ergänzung mit Spülvorrichtungen zu einem erhöhten Verbrauch führt.

Eine Aufgabe der vorliegenden Erfindung ist es, ein Trink- und Brauchwassersystem anzugeben, das die gesetzlichen Vorgaben zur Wasserhygiene erfüllt, eine korrekte Wasserzählung einzelner Wohneinheiten ermöglicht und einfacher zu installieren ist. Insbesondere soll das Trink- und Brauchwassersystem nach der vorliegenden Erfindung wasser- und energieeffizient sein.

Zur Lösung dieser Aufgabe schlägt die vorliegende Erfindung ein Trink- und Brauchwassersystem mit den Merkmalen von Anspruch 1 vor.

Das erfindungsgemäße Trink- und Brauchwassersystem ist in der Regel in einem Wohngebäude mit mehreren Wohneinheiten vorgesehen, wobei der Anschluss an das öffentliche Wasserversorgungsnetz üblicherweise in der untersten Etage bzw. im Keller des Wohngebäudes befindet. Üblicherweise ist an dem Anschluss ein Wasserzähler für den Gesamtverbrauch des Wohngebäudes vorgesehen. Über mindestens eine Verteilungsleitung wird das Trinkwasser für gewöhnlich in vertikaler Richtung auf mehrere Etagen und/oder in horizontaler Richtung in Wohnblöcke des Gebäudes verteilt. Das erfindungsgemäße Trink- und Brauchwassersystem kann ein Kaltwassersystem oder ein Warmwassersystem sein. Der Verteilungsleitung ist vorzugsweise eine Zirkulationsleitung zugeordnet, in der angetrieben von einer Zirkulationspumpe Wasser zu einer Wärmeübertragungseinrichtung des Wohngebäudes geführt wird, wobei in der Wärmeübertragungseinrichtung kaltem Wasser Wärme entzogen oder warmem Wasser Wärme zugeführt wird. So kann das durch die Verteilungsleitung in dem Wohngebäude verteilte Wasser in ständiger Zirkulation gehalten und verhindert werden, dass die Temperatur des Warmwassers zu sehr abfällt bzw. die Temperatur des Kaltwassers zu sehr steigt. Eine Wassertemperatur im Bereich von 20 bis 55 °C ist in der Regel zu vermeiden, da sich in diesem Temperaturbereich Bakterien, insbesondere Legionellen, vermehren.

Das erfindungsgemäße Trink- und Brauchwassersystem stellt eine wasser- und energieeffiziente Wasserversorgung sicher, die den hygienischen Anforderungen bzgl. Trinkwasser genügt. Abgestandenes Wasser wird durch die ständige Zirkulation oder den nachgeschalteten Verbrauch und bevorzugt durch einen ständigen Wärmeeintrag bzw. -entzug durch die Wärmeübertragungseinrichtung vermieden. Insofern kann in der Wohneinheit auf eine Spülvorrichtung zum Ablassen von abgestandenem oder hygienisch bedenklichem Wasser aus dem Trink- und Brauchwassersystem verzichtet werden.

Das erfindungsgemäße Trink- und Brauchwassersystem weist mindestens eine Wohneinheit mit einer Ringleitung auf, die bevorzugt so an eine Verteilungsleitung eines Gebäudes angeschlossen ist, dass bei einer Durchströmung der Verteilungsleitung auch die Ringleitung durchströmt wird. Üblicherweise wird dies durch ein zwischen einer Einfädel- und einer Ausfädelöffnung zur Ringleitung vorgesehenes Strömungs-Widerstandselement bewirkt. Die zentralen Gebäudeleitungen sind in diesem Fall direkt mit der der Wohneinheit zugeordneten Ringleitung fluidisch verbunden. Strömungsenergie und Wärme erreicht so unmittelbar die Ringleitung, indem Wasser aus der Verteilungsleitung an einem Ende der Ringleitung in dieselbe abgezweigt und am anderen Ende der Ringleitung wieder in die Verteilungsleitung eingesogen wird.

Das Trink- und Brauchwassersystem nach der vorliegenden Erfindung hat einen Anschluss an das öffentliche Wasserversorgungsnetz, mindestens eine Verteilungsleitung, vorzugsweise eine das Wasser der Verteilungsleitung zu einer Wärmeübertragungseinrichtung rückführende Zirkulationsleitung, wobei die Wärmeübertragungseinrichtung dem Wasser Wärme entzieht oder Wärme zuführt, und ebenfalls vorzugsweise eine in der Zirkulationsleitung vorgesehene Zirkulationspumpe, sowie eine in einer Wohneinheit vorgesehene und mit der Verteilungsleitung kommunizierende Ringleitung, an die mindestens ein Verbraucher angeschlossen ist, einen der Wohneinheit zugeordneten Wasserzähler und eine Kopplungseinrichtung, die zwei starr miteinander gekoppelte Fördereinrichtungen aufweist, wobei der Wasserzähler in einer Bypassleitung angeordnet ist, welche zumindest eine der beiden Fördereinrichtungen überbrückt. Wie eingangs erwähnt ist ein solches Trink- und Brauchwassersystem aus DE 10 2017 101 532 A1 bekannt.

Wie bereits erläutert hat das Trink- und Brauchwassersystem nach der vorliegenden Erfindung eine in einer Wohneinheit vorgesehene Ringleitung, an die mindestens ein Verbraucher angeschlossen ist und die mit der Verteilungsleitung kommuniziert. Die Verteilungsleitung und die Ringleitung können beispielsweise zwischen einer Einfädelöffnung und einer Ausfädelöffnung parallel geschaltet sein. Die Einfädelöffnung und die Ausfädelöffnung sind dabei für gewöhnlich an der Verteilungsleitung vorgesehen und bilden jeweils eine Durchgangsöffnung zu der Ringleitung. Üblicherweise sind die Einfädelöffnung und die Ausfädelöffnung quer zu einer Längserstreckung der Verteilungsleitung vorgesehen. Der Nenndurchmesser der Ringleitung ist für gewöhnlich um mindestens einen Nenndurchmessersprung kleiner als der Nenndurchmesser der Verteilungsleitung. Der Nenndurchmesser der Ringleitung kann beispielsweise DN 15 oder DN 10 betragen. Genauso gut kann die Ringleitung zwei voneinander getrennte Abschnitte der Verteilungsleitung miteinander verbinden.

In der Verteilungsleitung kann zwischen der Einfädelöffnung und der Ausfädelöffnung ein Strömungswiderstandselement angeordnet sein, das in durchströmtem Zustand eine Druckdifferenz zwischen der Einfädelöffnung und der Ausfädelöffnung erzeugt und eine Durchströmung der Ringleitung bewirkt. Das Strömungswiderstandselement ist vorzugsweise flexibel ausgebildet, sodass die Durchtrittsfläche dynamisch anpassbar ist. Dabei ist die Flexibilität dergestalt, dass sich der Strömungsquerschnitt durch den vorherrschenden Fluiddruck selbstständig anpasst. Ein flexibles Strömungswiderstandselement im Sinne der Anmeldung kann beispielsweise durch eine Hülse, die ein Ende mit einer elastischen Umfangswandung aufweist, wie grundsätzlich aus EP 2 843 141 A1 bekannt, oder durch einen in Hauptströmungsrichtung beweglichen und relativ zu einem Ventilsitz vorgespannt Ventilkörper gebildet sein. Das bewegliche Strömungswiderstandselement kann insbesondere wie aus der auf die Anmelderin zurückgehenden DE 20 2011 002 327 U1 bekannt ausgestaltet sein, deren Offenbarung zu den Details des flexiblen Strömungswiderstandselements durch Bezugnahme in die Anmeldung aufgenommen ist.

Aufgrund des Venturi-Effekts wird an der Einfädelöffnung Wasser aus der Ringleitung in die Verteilungsleitung eingesogen und damit einhergehend eine Teilströmung an der Ausfädelöffnung in die Ringleitung abgezweigt. Jedenfalls wird die kleinste Durchtrittsöffnung des flexiblen Strömungswiderstandselements abhängig von dem Volumenstrom und aufgrund der vorherrschenden Strömung so verändert, dass die kleinste Durchtrittsfläche bei kleinem Volumenstrom kleiner ist als bei einem größeren Volumenstrom. Diese Veränderung ergibt sich in der Regel als Reaktion eines elastisch vorgespannten und die Durchtrittsfläche verändernden Elements.

Bevorzugt ist die Verteilungsleitung und/oder die Ringleitung aus Metall, insbesondere Edelstahl und/oder Kupfer hergestellt. Die Verteilungsleitung und/oder die Ringleitung kann aber auch ein Kunststoffrohr aufweisen oder durch ein solches gebildet sein. Die Verteilungsleitung hat für gewöhnlich einen Nenndurchmesser von DN 15, 18, 22, 28, 35, 42 oder 54.

Der Wohneinheit ist ein Wasserzähler zugeordnet. Da die Ringleitung aufgrund der Zirkulationspumpe des Gebäudes oder eines nachgeschalteten Verbrauchs und der fluidmäßigen Kopplung der Ringleitung mit der Verteilungsleitung auch dann durchströmt wird, wenn kein Wasser aus der Ringleitung entnommen wird, ist der Wasserzähler nicht in der Ringleitung angeordnet. Denn sonst würde der von dem Wasserzähler gezählte Verbrauch deutlich höher sein als der tatsächliche Verbrauch.

Das Trink- und Brauchwassersystem nach der vorliegenden Erfindung hat eine Kopplungseinrichtung, die zwei starr miteinander gekoppelte Fördereinrichtungen aufweist, wobei eine erste Fördereinrichtung in einem Abschnitt der Ringleitung, der in Strömungsrichtung vor dem Verbraucher vorgesehen ist, und eine zweite Fördereinrichtung in einem Abschnitt der Ringleitung, der in Strömungsrichtung hinter dem Verbraucher vorgesehen ist, angeordnet sind und wobei die erste Fördereinrichtung und die zweite Fördereinrichtung jeweils durch eine nach dem Verdrängerprinzip arbeitende Strömungsmaschine mit einem geschlossenen Volumen gebildet und antriebsgekoppelt sind. Die Fördereinrichtungen werden in dem jeweiligen Abschnitt, in dem sie angeordnet sind, von dem in der Ringleitung befindlichen Wasser durchströmt.

Der Wasserzähler der Wohneinheit ist in einer Bypassleitung angeordnet, welche zumindest eine der Fördereinrichtungen der Kopplungseinrichtung überbrückt. Mit anderen Worten bildet die Bypassleitung einen Strömungsweg zu dem Verbraucher, wobei die Fördereinrichtungen der Kopplungseinrichtung außerhalb dieses Strömungswegs vorgesehen sind. Dabei kann die Bypassleitung und der Wasserzähler in einem gemeinsamen Gehäuse der Kopplungseinrichtung angeordnet sein. Eine solche Kopplungseinrichtung mit zwei starr miteinander gekoppelten Fördereinrichtungen, einem in einem Bypass vorgesehenen Wasserzähler und vier mit einer Ringleitung verbindbaren Einlass- bzw. Auslassöffnungen kann für sich erfindungswesentlich sein.

Üblicherweise weist jede der Fördereinrichtungen eine Welle auf, die starr miteinander gekoppelt sind. Als starre Kopplung in diesem Sinne wird jede Verbindung der Wellen verstanden unabhängig davon, ob diese Wellen unmittelbar fest mechanisch miteinander verbunden sind oder aber durch andere Mittel berührungsfrei eine wirkmäßige Kopplung erfahren. Als starre Kopplung sind namentlich auch solche Systeme zu verstehen, bei denen die Wellen durch Getriebe oder berührungsfrei miteinander in Verbindung stehende, mechanisch indes einander zugeordnete Kopplungselemente miteinander gekoppelt sind. Durch diese starre Kopplung der Fördereinrichtungen kann sichergestellt werden, dass ein durch die Ringleitung und die Kopplungseinrichtung zu dem Verbraucher hin fließender Volumenstrom einem durch die Ringleitung und durch die Kopplungseinrichtung von dem Verbraucher weg und hin zur Verteilungsleitung fließendem Volumenstrom entspricht. Die Drehzahl der Wellen der Fördereinrichtungen ist durch die starre Kopplung vorzugsweise identisch.

Bei einer Wasserentnahme durch den Verbraucher der Wohneinheit muss allerdings mehr Wasser in die Ringleitung hineinfließen als aus der Ringleitung in die Verteilungsleitung zurückfließt. Aufgrund des Strömungsgleichgewichts zwischen den Fördereinrichtungen der Kopplungseinrichtung, wird genau die bei einer Wasserentnahme durch den Verbraucher angeforderte Wassermenge durch die Bypassleitung bereitgestellt, in der der Wasserzähler angeordnet ist. Damit ist eine korrekte Wasserzählung des Wasserverbrauchs der Wohneinheit möglich.

Die Fördereinrichtungen werden allein von der Strömungsenergie des Wassers der Ringleitung angetrieben, die ohne einen Verbrauch an den Entnahmestellen der Ringleitung durch eine zentrale Zirkulationspumpe des Wohngebäudes oder durch einen Verbrauch an Entnahmestellen, die der Wohneinheit nachgeschaltet an der Verteilungsleitung angeschlossen sind, erzeugt wird. Eine Versorgung der Fördereinrichtungen mit elektrischer Energie ist nicht erforderlich. Bevorzugt haben die Fördereinrichtungen das gleiche Fördervolumen. Weiter bevorzugt haben die Fördereinrichtungen durch die starre Kopplung die gleiche Drehzahl. Als Fördereinrichtungen sind vorzugsweise zwei Verdrängerpumpen mit starr gekoppelten Antriebswellen vorgesehen. Eine starre Kopplung kann insbesondere durch eine gemeinsame Antriebswelle verwirklicht sein. Insbesondere können als die Fördervorrichtungen zwei rotierende Verdrängerpumpen, z.B. zwei Zahnradpumpen mit jeweils einem Zahnradpaar vorgesehen sein, deren Antriebswellen starr gekoppelt sind.

Eine Verdrängerpumpe fördert das Wasser durch in sich geschlossene Volumina. Als ein geschlossenes Volumen ist dabei ein spaltfreies Volumen zu verstehen, welches außer durch konstruktionsbedingte Undichtigkeiten keinen Rückfluss entgegen der Förderrichtung der Verdrängerpumpe zulässt, selbst wenn die Pumpe zum Stillstand kommt.

Wie in Ringleitungen üblich soll das Wasser der Ringleitung zu beiden Seiten des Verbrauchers genutzt werden, um den Verbraucher im Entnahmefall mit Wasser zu versorgen, sodass die Ringleitung entsprechend klein dimensioniert werden kann.

Vorzugsweise sind hierzu ein in Strömungsrichtung vor dem Verbraucher liegender Bereich der Ringleitung und ein in Strömungsrichtung hinter dem Verbraucher liegender Bereich der Ringleitung durch eine erste Verbindungsleitung miteinander verbunden, wobei die beiden durch die erste Verbindungsleitung verbundenen Bereiche der Ringleitung zwischen den beiden Fördereinrichtungen vorgesehen sind. Das im Wasserentnahmefall durch die Bypassleitung in einen dieser Bereiche einfließende Wasser kann so aus beiden Richtungen dem Verbraucher zugeführt werden. In der ersten Verbindungsleitung ist ein erster Rückflussverhinderer vorgesehen, der so orientiert ist, dass die erste Verbindungsleitung im Zirkulationsfall - das heißt wenn Wasser in der Ringleitung zirkuliert ohne dass Wasser aus der Ringleitung entnommen wird - die Ringleitung nicht kurzschließt, d.h. den Verbraucher nicht von der Zirkulation abschneidet. Ein auslassseitiges Ende der Bypassleitung ist nach dieser bevorzugten Weiterbildung mit dem in Strömungsrichtung hinter dem Verbraucher vorgesehenen Bereich der Ringleitung verbunden, der sich zwischen der Fördereinrichtung und dem Verbraucher befindet.

Weiter bevorzugt verbindet eine zweite Verbindungsleitung die Bereiche der Ringleitung, die zwischen der Einfädelöffnung bzw. der Ausfädelöffnung und der Fördereinrichtung vorgesehen sind. Damit kann die Bypassleitung durch die Einfädelöffnung einerseits und die Ausfädelöffnung andererseits aus beiden Richtungen der Verteilungsleitung mit Wasser gespeist werden. Ein zweiter Rückflussverhinderer ist in der zweiten Verbindungsleitung vorgesehen und so orientiert, dass im Zirkulationsfall kein strömungsmäßiger Kurzschluss entsteht, der die Kopplungseinrichtung und den Verbraucher von der Zirkulation abschneidet.

Weiter bevorzugt weist die Kopplungseinrichtung zwei Zahnradpumpen als erste und zweite Fördereinrichtungen auf, die starr miteinander gekoppelt sind, wobei aufgrund der Kopplung die Drehrichtung der beiden Zahnradpumpen entgegengesetzt sind. So kann die Fließrichtung des Wassers durch die Kopplungseinrichtung umgekehrt werden.

Die erfindungsgemäße Lösung ist nicht auf den Einsatz einer Verdrängerpumpe, insbesondere einer Zahnradpumpe, als Fördereinrichtung beschränkt. Genauso gut kann jede andere volumetrische Strömungsmaschine verwendet werden. Dazu zählen zum Beispiel die aus der Volumenstrommessung bekannten Verdrängerzähler, z.B. Oval-Zahnrad-Volumenzähler oder Ringkolbenzähler. Genauso gut können die Wellen der Förderereinrichtungen so starr miteinander gekoppelt sein, dass die Drehrichtung der Fördereinrichtungen dieselbe ist, d.h. die Fließrichtung in den Förderereinrichtungen dieselbe ist.

In der Kopplungseinrichtung ist das von der einen Förderereinrichtung geförderte Wasser fluidisch von dem durch die andere Förderereinrichtung geförderten Wasser getrennt. Die Förderereinrichtungen können in einem gemeinsamen Gehäuse der Kopplungseinrichtung vorgesehen sein und durch eine Trennwand voneinander getrennt sein. Eine gemeinsame Welle der Förderereinrichtungen kann dichtend durch die Trennwand hindurchgeführt sein.

Nach einer anderen bevorzugten Weiterbildung weist die Kopplungseinrichtung drei paarweise kämmende Zahnräder auf, wobei das eine der beiden äußeren Zahnräder Wasser von der Einfädelöffnung in Richtung des Verbrauchers fördert und das andere der beiden äußeren Zahnräder Wasser von dem Verbraucher in Richtung der Ausfädelöffnung fördert. Die Drehzahl der beiden äußeren Zahnräder ist dabei identisch, da sie durch das mittlere Zahnrad direkt mechanisch miteinander gekoppelt sind. Des Weiteren sind die Zahnräder so ausgelegt, dass die jeweiligen Fördervolumen identisch sind. Vorteil dieser bevorzugten Weiterbildung ist, dass die paarweise kämmenden Zahnräder üblicherweise in einer Ebene angeordnet sind. Damit kann die Kopplungseinrichtung flacher ausgestaltet werden und eignet sich besonders für den Unterputz-Einbau in eine Wand.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine schematische Darstellung eines ersten Ausführungsbeispiels,
- Fig. 2: eine Explosionsdarstellung einer Kopplungseinrichtung,
- Fig. 3: eine schematische Darstellung eines zweiten Ausführungsbeispiels,
- Fig. 4: eine Explosionsdarstellung einer Kopplungseinrichtung,
- Fig. 5: eine Kopplungseinrichtung mit Wasserzähler,
- Fig. 6: eine Längsschnittansicht der Kopplungseinrichtung aus Fig. 5,
- Fig. 7: eine Längsschnittansicht der um 180° gedrehten Kopplungseinrichtung aus Fig. 5,
- Fig. 8: eine im Vergleich zu den Fig. 6 und 7 orthogonale Längsschnittansicht der Kopplungseinrichtung aus Fig. 5,
- Fig. 9: eine im Vergleich zu den Fig. 6 und 7 orthogonale Längsschnittansicht der um 180° gedrehten Kopplungseinrichtung aus Fig. 5,
- Fig. 10: eine Draufsicht auf eine Kopplungseinrichtung mit drei paarweise kämmenden Zahnrädern.

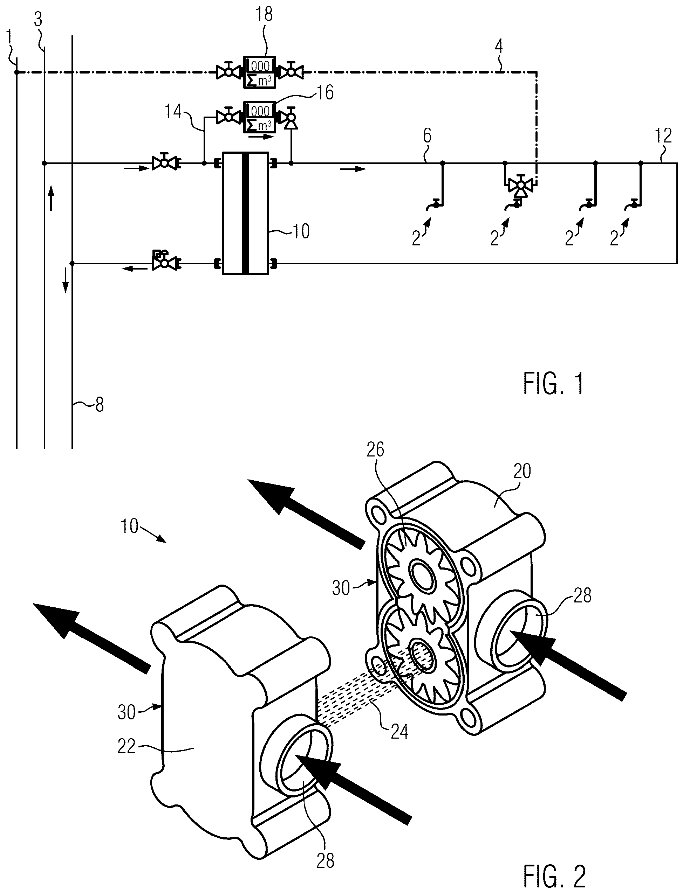

Die Figur 1 stellt ein Trink- und Brauchwassersystem eines Gebäudes dar. Es hat eine Verteilungsleitung 1 zur Verteilung von Kaltwasser innerhalb des Gebäudes und eine Verteilungsleitung 3 zur Verteilung von warmem Wasser innerhalb des Gebäudes. Die Verteilungsleitungen 1, 3 sind über einen (nicht-dargestellten) Anschluss als Punkt des Übergangs gemäß § 3, Abs. 3 TrinkwV 2001 an das öffentliche Wasserversorgungsnetz angeschlossen und erstrecken sich üblicherweise in vertikaler und/oder horizontaler Richtung, um mehrere Wohneinheiten mit Wasser zu versorgen, welche über mehrere Etagen übereinander und/oder in mehreren Blöcken hintereinander angeordnet sein können.

Die Verteilungsleitungsleitungen 1, 3 sind jeweils mit einer in einer Wohneinheit vorgesehenen Versorgungsleitung 4, 6 verbunden, die mindestens einen Verbraucher 2 mit Kalt- bzw. Warmwasser versorgen.

Die Warmwasser-Verteilungsleitung 3 ist mit einer Zirkulationsleitung 8 verbunden, die das warme Wasser zu einer zentralen (nicht-dargestellten) Wärmeübertragungseinrichtung des Gebäudes rückführt. Die Zirkulationsleitung 8 hat vorliegend einen kleineren Nenndurchmesser als die Warmwasser-Verteilungsleitung 3. In der Zirkulationsleitung 8 ist eine (nicht dargestellte) Zirkulationspumpe angeordnet, die das warme Wasser in den Leitungen 3, 8 in ständiger Zirkulation hält, sodass Wärmeverluste in den Leitungen 3, 8 durch die zentrale Wärmeübertragungseinrichtung ausgeglichen werden. Kaltes Frischwasser, das in die Warmwasserleitungen 3, 8 nach einer Warmwasserentnahme durch einen Verbraucher 2 über den Anschluss an das öffentliche Wasserversorgungsnetz nachfließt, wird ebenfalls durch die zentrale Wärmeübertragungseinrichtung erwärmt.

Die Warmwasser-Versorgungsleitung 6 ist über eine Kopplungseinrichtung 10 an die Warmwasser-Verteilungsleitung 3 gekoppelt, wobei die Kopplungseinrichtung 10 die durch die Zirkulationspumpe induzierte Strömungsenergie auf das in der Warmwasser-Versorgungleitung 6 befindliche Wasser überträgt. Diese Übertragung erfolgt ohne einen direkten Kontakt des Wassers der Warmwasser-Versorgungsleitung 6 und des Wassers der Warmwasser-Verteilungsleitung 3. Die Kopplungseinrichtung 10 weist hierzu zwei fluidmäßig voneinander getrennte durchströmbare Kammern und ein durch die Trennung dichtend hindurchgeführtes Mittel zur Übertragung der Strömungsenergie auf. Die Kopplungseinrichtung 10 ist in Figur 2 im Detail dargestellt.

Die Warmwasser-Versorgungleitung 6 ist in Strömungsrichtung hinter dem letzten Verbraucher 2 mit einer Wohneinheit-Zirkulationsleitung 12 verbunden, die einen kleineren Nenndurchmesser als die Warmwasser-Versorgungleitung 6 hat und mit der Kopplungseinrichtung 10 verbunden ist. Die Warmwasser-Versorgungleitung 6 und die Wohneinheit-Zirkulationsleitung 12 bilden insofern einen Kreislauf innerhalb der Wohneinheit, in welchem das Warmwasser aufgrund der durch die Kopplungseinrichtung 10 übertragenen Strömungsenergie zirkuliert. Das Gehäuse der Kopplungseinrichtung 10 ist aus einem gut-wärmeleitenden Material hergestellt, sodass Wärmeverluste des in der Wohneinheit zirkulierenden Wassers über die Leitungen durch Wärmeleitung über das Gehäuse der Kopplungseinrichtung 10 ausgeglichen werden.

Die übertragene Wärme wird durch die zentrale Wärmeübertragungseinrichtung bereitgestellt und durch die Warmwasser-Verteilungsleitung 3 zur Kopplungseinrichtung 10 transportiert. So ist eine hygienisch unbedenkliche Wasserversorgung der Verbraucher sichergestellt. Die Strömungsenergie wird durch die Zirkulationspumpe bereitgestellt, die von der Kopplungseinrichtung 10 in die Leitungen der Wohneinheit übertagen wird. Auf eine Wohneinheit-Zirkulationspumpe und damit auch auf einen elektrischen Anschluss hierfür kann verzichtet werden. Die Kopplungseinrichtung 10 ist an einem Ort installierbar an dem kein elektrischer Anschluss vorhanden ist, beispielsweise dort wo üblicherweise Wasserzähler installiert sind.

Zur Verbesserung der Kaltwasserversorgung, insbesondere bei längerem Ausbleiben einer Wasserentnahme von Kaltwasser, können auch die Kaltwasserleitungen 1, 4 jeweils mit einer Zirkulationsleitung verbunden und über eine zweite Kopplungseinrichtung miteinander gekoppelt werden. Dabei ist die Kaltwasser-Versorgungsleitung 1 in der zentralen Wärmeübertragungseinrichtung des Gebäudes durch Entzug von Wärme zu kühlen. Die entzogene Wärme kann zur Erwärmung des Warmwassers genutzt werden. Die Wärmeübertragungseinrichtung kann beispielsweise eine Wärmepumpe sein.

Die Warmwasser-Verteilungsleitung 3 ist über einen in einer Verbindungsleitung 14 angeordneten Warmwasser-Wasserzähler 16 fluidmäßig mit der Warmwasser-Versorgungsleitung 6 verbunden. Da der Strömungswiderstand der Kopplungseinrichtung 10 gegenüber dem des Wasserzählers 16 vernachlässigbar ist, wird der Wasserzähler 16 von der Zirkulationsströmung nicht erfasst und nur dann durchströmt, wenn tatsächlich Warmwasser durch einen Verbraucher 2 entnommen wird. Dadurch ist eine korrekte Wasserzählung gewährleistet.

In der Kaltwasser- Versorgungsleitung 4 ist ein Kaltwasser-Wasserzähler 18 vorgesehen. Sofern die Kaltwasserleitungen, wie obig angedeutet, ebenfalls zur Zirkulation von Kaltwasser weitergebildet sind, ist der Kaltwasser-Wasserzähler 18 ebenfalls in einer Verbindungsleitung anzuordnen.

Die Figur 2 stellt die Kopplungseinrichtung 10 im Detail dar, welche zwei Zahnradpumpen 20, 22 aufweist, die über eine gemeinsame Welle 24 starr miteinander gekoppelt sind. Dabei haben die Zahnradpumpen 20, 22 ein geschlossenes Volumen in dem Sinne, dass an den Zahnspitzen der Zahnräder kein umfänglicher Spalt zum Durchfluss von Wasser vorgesehen und das Wasser zwischen den Zähnen der Zahnräder gefördert wird. Eine der beiden Zahnradpumpen 20, 22 übernimmt hier die Funktion eines Zahnradmotors, d.h. entzieht der Strömung im Verteilnetz des Gebäudes Energie und überträgt diese über die starr gekoppelte Zahnradpumpe auf die Strömung in der Wohneinheit. Die Welle 24 ist durch eine (nicht-dargestellte) Trennwand hindurchgeführt, die ein Gehäuse der Kopplungseinrichtung 10 in zwei fluidmäßig voneinander getrennte Kammern unterteilt, in denen jeweils ein miteinander kämmendes Zahnradpaar 26 angeordnet ist. Beide Zahnradpumpen 20, 22 haben eine Einlass- und eine Auslassöffnung 28, 30, zwischen denen das jeweilige Zahnradpaar 26 vorgesehen ist. Die Einlass- und die Auslassöffnung 28, 30 der einen Zahnradpumpe 20 - die als Motor fungiert - sind mit der Warmwasser-Verteilungsleitung 3 und der Zirkulationsleitung 8 und die Einlass- und die Auslassöffnung 28, 30 der anderen Zahnradpumpe 22 sind mit der Warmwasser-Versorgungsleitung 6 verbunden, die zusammen mit der Wohneinheit-Zirkulationsleitung 12 eine Ringleitung bildet.

Wasser der Warmwasser-Versorgungsleitung 3 durchströmt die Zahnradpumpe 20, treibt dabei das Zahnradpaar 26 an und verlässt die Zahnradpumpe 20 in Richtung der Zirkulationsleitung 8. Durch die starre Kopplung über die gemeinsame Welle 24 wird dabei auch das Zahnradpaar 26 der anderen Zahnradpumpe 22 - die hier tatsächlich als Pumpe arbeitet und das Wasser in der Warmwasser-Versorgungsleitung 6 umwälzt - angetrieben, sodass die andere Zahnradpumpe 22 das Wasser der Warmwasser-Versorgungsleitung 6 und der Wohneinheit-Zirkulationsleitung 12 von der Einlassöffnung 28 zur Auslassöffnung 30 fördert. Somit wird Strömungsenergie auf das Wasser der Wohneinheit-Leitungen übertragen. Die Zahnradpumpen 20, 22 werden ausschließlich durch die von der Zirkulationspumpe induzierten Strömungsenergie angetrieben. Eine weitere äußere Zufuhr von Energie ist nicht erforderlich und daher nicht vorgesehen.

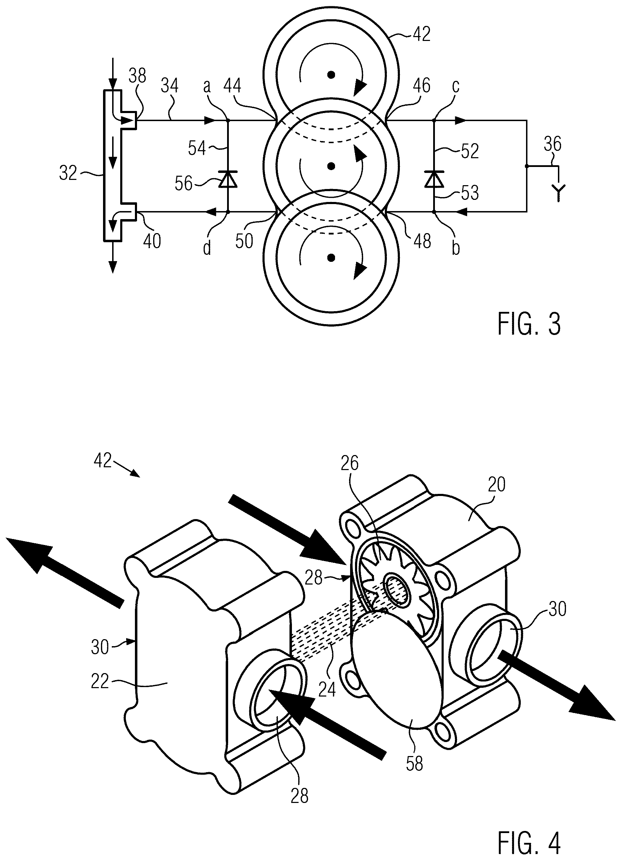

Mit der im letzten Absatz beschriebenen Funktion findet außer im Verbrauchsfall kein Wasseraustausch zwischen den Verteilungsleitungen im Gebäude und den Leitungen in der Wohnung statt. Die Kopplungseinrichtung 10 nach Figur 2 kann aber auch für die Funktion benutzt werden, wie sie in den Ausführungsbeispielen der Figuren 3 bis 9 beschrieben ist. In diesem Fall ist die Kopplungseinrichtung 10 nach Figur 2 nur anders anzuschließen: Anschluss 28 der Zahnradpumpe 22 aus Figur 2 entspricht Anschluss 44 aus Figur 3; Anschluss 30 der Zahnradpumpe 22 aus Figur 2 entspricht Anschluss 46 aus Figur 3; Anschluss 28 der Zahnradpumpe 20 aus Figur 2 entspricht Anschluss 48 aus Figur 3; und Anschluss 30 der Zahnradpumpe 20 aus Figur 2 entspricht Anschluss 50 aus Figur 3. Die Figur 3 stellt ein zweites Ausführbeispiel dar. Das hier dargestellte Leitungssystem kann zur Versorgung von Verbrauchern mit Kalt- oder Warmwasser verwendet werden. Auch in diesem Ausführungsbeispiel ist eine Verteilungsleitung 32 zur Verteilung von Wasser innerhalb eines Gebäudes vorgesehen. Die Verteilungsleitung 32 ist wie in dem ersten Ausführungsbeispiel in Verbindung mit der Warmwasser-Verteilungsleitung 3 beschrieben mit einem Anschluss an das öffentliche Wasserversorgungsnetz verbunden und bevorzugt mit einer Zirkulationsleitung mit Zirkulationspumpe und einer zentralen Wärmeübertragungseinrichtung des Gehäuses verbunden. Diese Details sind in Fig. 3 nicht dargestellt. Ist das Leitungssystem ein Kaltwassersystem, entzieht die Wärmeübertragungseinrichtung dem Kaltwasser Wärme. Ist das Leitungssystem ein Warmwassersystem, führt die Wärmeübertragungseinrichtung dem Warmwasser Wärme zu.

An die Verteilungsleitung 32 ist eine Ringleitung 34 angeschlossen, die sich innerhalb einer Etage und innerhalb einer Wohneinheit eines Gebäudes erstreckt und einen Verbraucher 36 mit Wasser versorgt. An einem Ende ist die Ringleitung 34 an eine Ausfädelöffnung 38 der Verteilungsleitung 32 und an dem anderen Ende ist die Ringleitung 34 an eine Einfädelöffnung 40 der Verteilungsleitung 32 angeschlossen.

Bei einer Durchströmung der Verteilungsleitung 32 wird auch die Ringleitung 34 durchströmt. Hierzu ist zwischen der Ausfädel- und der Einfädelöffnung 38, 40 ein (nicht-dargestelltes) Strömungswiderstandselement vorgesehen. Aufgrund des Venturi-Effekts bewirkt das Strömungswiderstandselement, dass Wasser aus der Verteilungsleitung 32 an einem Ende der Ringleitung 34 in dieselbe abgezweigt und am anderen Ende der Ringleitung 34 wieder in die Verteilungsleitung eingesogen wird. Damit kann ein Abstehen von Wasser und eine Wassertemperaturentwicklung hin zu hygienisch bedenklichen Temperaturen vermieden werden.

Die Ringleitung 34 ist mit einer Kopplungseinrichtung 42 verbunden, die eine erste Einlassöffnung 44, eine erste Auslassöffnung 46, eine zweite Einlassöffnung 48 und eine zweite Auslassöffnung 50 aufweist. Zwischen der ersten Einlassöffnung 44 und der ersten Auslassöffnung 46 hat die Kopplungseinrichtung 42 eine erste durchströmbare Kammer und zwischen der zweiten Einlassöffnung 48 und der zweiten Auslassöffnung 50 hat die Kopplungseinrichtung 42 eine zweite durchströmbare Kammer. Die beiden Kammern sind fluidisch voneinander getrennt.

Die erste Kammer ist an den in Strömungsrichtung dem Verbraucher 36 vorgelagerten Teil der Ringleitung 34 angeschlossen und die zweite durchströmbare Kammer ist an den in Strömungsrichtung dem Verbraucher 36 nachgelagerten Teil der Ringleitung 34 angeschlossen. In den beiden Kammern der Kopplungseinrichtung 42 ist jeweils ein Zahnradpaar vorgesehen, wobei die beiden Zahnradpaare mit der jeweiligen Kammerwandung ein geschlossenes Volumen bilden und über eine gemeinsame Welle starr miteinander gekoppelt sind, die dichtend durch eine Trennwand der Kopplungseinrichtung 42 hindurchgeführt ist. Die Kopplungseinrichtung ist im Details in Figur 4 dargestellt.

Die Drehzahl der beiden Zahnradpaare ist durch die starre Kopplung identisch. Auch die Fördervolumina durch die beiden Kammern der Kopplungseinrichtung 42 sind identisch. Insofern fließt immer die gleiche Wassermenge durch die beiden Kammern. Dabei ist die Fließrichtung in den beiden Kammern so, dass Wasser in der einen Kammer zu dem Verbraucher hin und in der anderen von dem Verbraucher weg fließt.

Ein der Wohneinheit zugeordneter (nicht dargestellter) Wasserzähler ist in einer (nicht dargestellten) Bypassleitung angeordnet, die die Kopplungseinrichtung 42 überbrückt, sodass ein Strömungsweg von der Verteilungsleitung 32 hin zu dem Verbraucher 36 gebildet ist, wobei die Kopplungseinrichtung 42 außerhalb dieses Strömungswegs angeordnet ist. Da die Kopplungseinrichtung 42 genau die Wassermenge von dem Verbraucher 36 wegführt, die sie zu dem Verbraucher 36 hinführt, muss die von dem Verbraucher 36 angeforderte Wassermenge somit durch die Bypassleitung fließen. Eine korrekte Wasserzählung ist so gewährleistet.

Die Bypassleitung ist mit einem Ende an einen Knotenpunkt a der Ringleitung 34 und mit dem anderen Ende an einen Knotenpunkt b der Ringleitung 34 angeschlossen. Im Falle einer Wasserentnahme durch den Verbraucher 36 wird die Kopplungseinrichtung 42 durch die Bypassleitung überbrückt. Damit der Verbraucher 36 aus beiden Richtungen der Ringleitung 34 mit Wasser versorgt werden kann, ist zwischen dem Knotenpunkt b und einem Knotenpunkt c, der in Strömungsrichtung hinter der ersten Kammer der Kopplungseinrichtung 42 liegt, eine erste Verbindungsleitung 52 vorgesehen. In dieser ersten Verbindungsleitung 52 ist ein Rückflussverhinderer 53 angeordnet, der einen strömungsmäßigen Kurzschluss verhindert, d.h. der verhindert, dass bei einem Ausbleiben einer Wasserentnahme durch den Verbraucher eine Zirkulationsströmung durch die erste Verbindungsleitung 52 von dem Knotenpunkt c zu dem Knotenpunkt b fließt, wodurch der Verbraucher 36 von der Zirkulationsströmung abgeschnitten wäre.

Ein zweite Verbindungsleitung 54 ist zwischen dem Knotenpunkt a und einem Knotenpunkt d vorgesehen, sodass im Falle einer Wasserentnahme durch den Verbraucher 36, die Bypassleitung aus beiden Richtungen der Verteilungsleitung 32 mit Wasser gespeist werden kann. In der zweiten Verbindungsleitung 54 ist ein zweiter Rückflussverhinderer 56 vorgesehen, der wie auch der erste Rückflussverhinderer 53 einen strömungsmäßigen Kurzschluss verhindert, d.h. der verhindert, dass bei einem Ausbleiben einer Wasserentnahme durch den Verbraucher 36 eine Zirkulationsströmung durch die Ausfädelöffnung in die Ringleitung 34, durch die zweite Verbindungsleitung 54 und durch die Einfädelöffnung aus der Ringleitung 34 fließt wodurch der Verbraucher 36 von der Zirkulationsströmung abgeschnitten wäre.

Alternativ kann auf die Verbindungsleitungen 52, 54 verzichtet werden. Die Bypassleitung mit dem Wasserzähler ist dann auch zwischen den Knotenpunkten a und c oder zwischen den Knotenpunkten b und d anschließbar, da die Gefahr eines strömungsmäßigen Kurzschlusses dann nicht besteht. Aufgrund der vorliegenden Strömungsrichtungen ist die Variante, in der der Wasserzähler zwischen den Knotenpunkten a und c angeschlossen ist, zu bevorzugen.

Die Figur 4 zeigt die Kopplungseinrichtung 42 aus Fig. 3 im Detail. Sie unterscheidet sich von der Kopplungseinrichtung 10 des ersten Ausführungsbeispiels dadurch, dass die eine Zahnradpumpe 20 um 180° gedreht ist, sodass die Seiten der Einlass- und Auslassöffnung 28, 30 dieser Zahnradpumpe 20 gegenüber Fig. 2 vertauscht sind. Gleiche Bauteile wurden hier mit gleichen Bezugszeichen versehen. Zusätzlich ist in Fig. 4 noch die Trennwand 58 angedeutet, wobei lediglich ein unterer Teil der Trennwand 58 zu erkennen ist, der vorliegend das untere Zahnrad des Zahnradpaares 26 verdeckt. Als Kopplungseinrichtung für das zweite Ausführungsbespiel kann grundsätzlich auch die in Figur 2 abgebildete Kopplungseinrichtung 10 verwendet werden. Es muss lediglich bei dem Anschluss der Ringleitung 34 an die Kopplungseinrichtung bzw. bei der Strömungsführung darauf geachtet werden, dass die Fließrichtung in der einen Kammer zu dem Verbraucher 36 hin und in der anderen Kammer von dem Verbraucher 36 weg gerichtet ist.

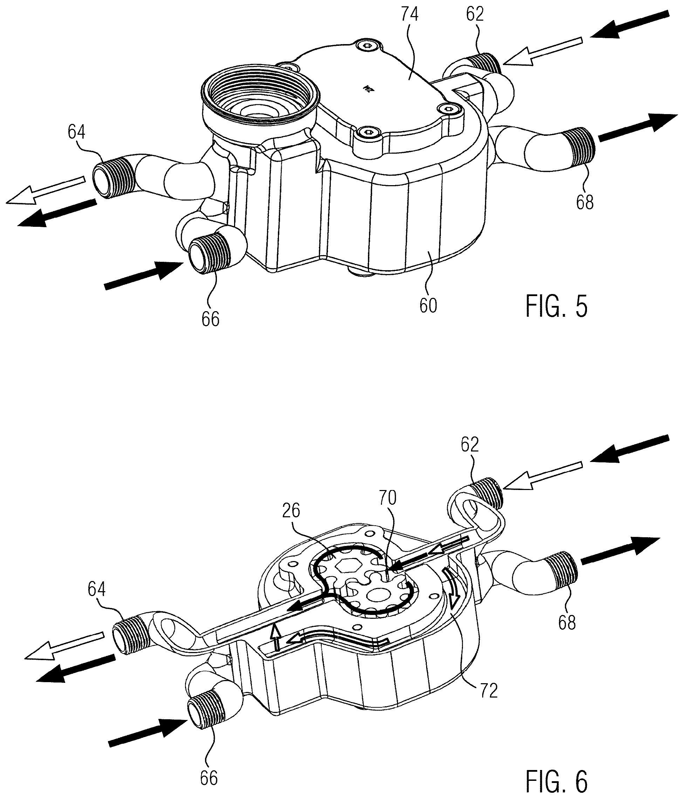

Die Figur 5 zeigt ein Gehäuse 60 mit einer ersten Einlassöffnung 62, einer ersten Auslassöffnung 64, einer zweiten Einlassöffnung 66 und einer zweiten Auslassöffnung 68. Zwischen der jeweiligen Einlass- und Auslassöffnung ist jeweils ein Strömungsweg mit einer Kammer durch das Gehäuse 60 gebildet, die voneinander fluidmäßig getrennt sind. Das Gehäuse 60 beinhaltet die Kopplungseinrichtung 10 des ersten Ausführungsbeispiels, das wie obig beschrieben für einen Wasseraustausch zwischen den Verteilungsleitungen des Gebäudes und den Leitungen der Wohneinheit angeschlossen ist, eine Bypassleitung und den Wasserzähler der Wohneinheit. Das Gehäuse 60 wird wie obig in Verbindung mit der Kopplungseinrichtung 42 beschrieben mit seinen Ein- und Auslassöffnungen 62, 66; 64, 68 an die Ringleitung 34 angeschlossen.

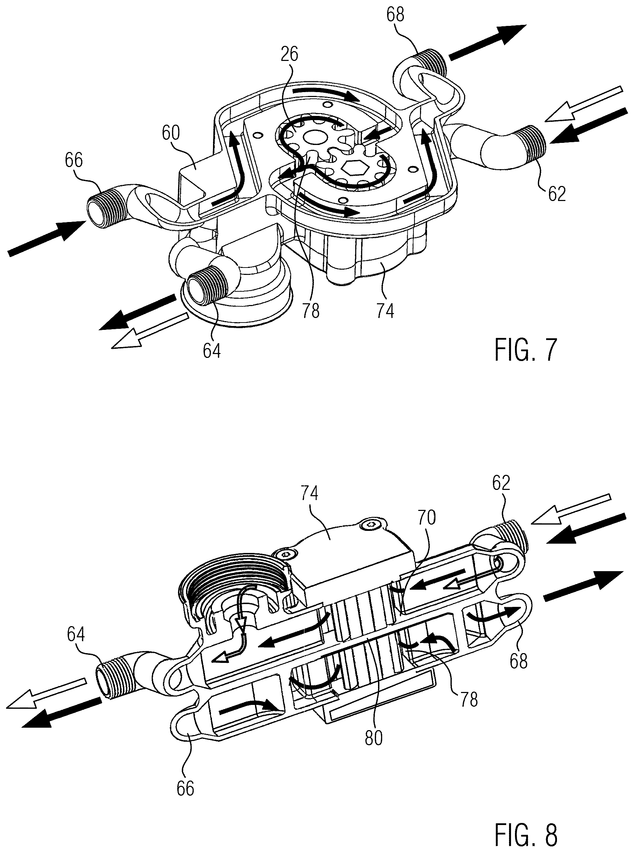

In jeder der zwei voneinander getrennten Kammern ist ein Zahnradpaar 26 angeordnet (vgl. Fig. 6 und Fig. 7). Eine mit der ersten Einlass- und der ersten Auslassöffnung 62, 64 kommunizierende erste Kammer 70 wird durch eine Bypassleitung 72 überbrückt (s. Fig. 6). Dabei fließt das Wasser der Bypassleitung durch einen Wasserzähler 74.

Die Figur 7 zeigt die zu der in Fig. 6 dargestellten gegenüberliegende Seite des Gehäuses 60. Abgebildet ist eine zweite Kammer 78, die mit der zweiten Einlass- und der zweiten Auslassöffnung 66, 68 kommuniziert und in der ebenfalls ein Zahnradpaar 26 angeordnet ist. Die Zahnradpaare 26 der beiden Kammern 70, 78 sind über die gemeinsame Welle 24 starr miteinander gekoppelt und drehen sich gleichsinnig. Somit ist auch die Förderrichtung der Zahnradpaare 26 identisch. Insofem wird die Fließrichtung des Wassers in der zweiten Kammer 78 zunächst um 180° umgelenkt, sodass es von der der zweiten Einlassöffnung 66 gegenüberliegenden Seite dem Zahnradpaar 26 zugeführt wird. Entsprechend muss das Wasser auf der anderen Seite des Zahnradpaars 26, die der zweiten Auslassöffnung 68 gegenüberliegt zur zweiten Auslassöffnung 68 hin umgelenkt und die Fließrichtung des Wassers um 180° gedreht werden.

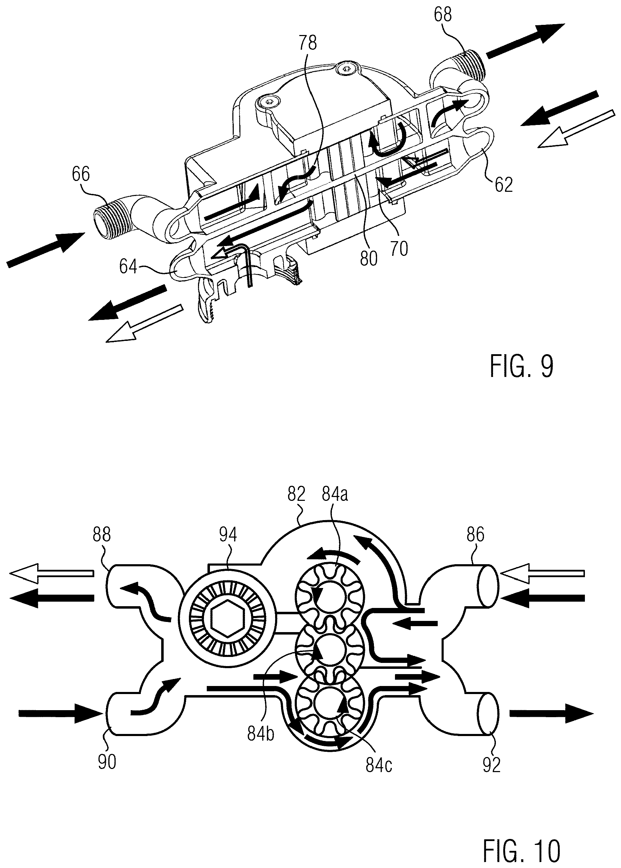

Die Figuren 8 und 9 zeigen die fluidmäßige Trennung zwischen den beiden Kammern 70, 78 durch eine Trennwand 80.

Die Figur 10 zeigt ein Gehäuse 82 mit einer Kopplungseinrichtung, die drei in einer Ebene angeordnete, paarweise kämmende Zahnräder 84 aufweist, wobei die beiden äußeren Zahnräder jeweils mit dem inneren Zahnrad und einer Gehäusewandung ein geschlossenes Volumen bilden. Auch dieses Gehäuse 82 hat eine erste Einlassöffnung 86, eine erste Auslassöffnung 88, eine zweite Einlassöffnung 90 und eine zweite Auslassöffnung 92, die wie obig beschrieben mit der Ringleitung 34 verbunden werden. Die starre Kopplung der beiden äußeren Zahnräder 84a, 84c ist durch das mittlere Zahnrad 84b gegeben, das mit beiden äußeren Zahnrädern 84a, 84c kämmt. Eine gemeinsame Welle entfällt bei dieser Kopplungseinrichtung.

Die Bypassleitung ist in Fig. 10 nicht dargestellt. Sie überbrückt die Kopplungseinrichtung und ist mit einem Wasserzähler 94 verbunden. Aufgrund der starren Kopplung der Zahnräder 84 und dadurch, dass die Fördervolumina der äußeren Zahnräder 84a, 84c identisch sind, fördert das Zahnrad 84a die gleiche Wassermenge in Richtung des Verbrauchers wie das andere äußere Zahnrad 84c von dem Verbraucher weg hin zur Verteilungsleitung 32 fördert.

Die Drehrichtung der äußeren Zahnräder 84a, 84c ist dieselbe. Demnach ist die Förderrichtung der äußeren Zahnräder 84a, 84c entgegengesetzt, was durch die obige Anschlusssituation an die Ringleitung 34 von Vorteil ist. Denn das Wasser wird jeweils von der Einlassöffnungs-Seite aus den Zahnrädern 84 zugeführt. Die vorher beschriebene Umlenkung des Wassers zur jeweils gegenüberliegenden Seite des Zahnrads 84 entfällt.

### Bezugszeichenliste

- 1: Kaltwasser-Verteilungsleitung
- 2: Verbraucher
- 3: Warmwasser-Verteilungsleitung
- 4: Kaltwasser-Versorgungsleitung
- 6: Warmwasser-Versorgungsleitung
- 8: Zirkulationsleitung
- 10: Kopplungseinrichtung
- 12: Wohneinheit-Zirkulationsleitung
- 14: Verbindungsleitung
- 16: Warmwasser-Wasserzähler
- 18: Kaltwasser-Wasserzähler
- 20, 22: Zahnradpumpe
- 24: gemeinsame Welle
- 26: Zahnradpaar
- 28: Einlassöffnung
- 30: Auslassöffnung
- 32: Verteilungsleitung
- 34: Ringleitung
- 36: Verbraucher
- 38: Ausfädelöffnung
- 40: Einfädelöffnung
- 42: Kopplungseinrichtung
- 44, 48: Einlassöffnung
- 46, 50: Auslassöffnung
- 52: erste Verbindungsleitung
- 53: erster Rückflussverhinderer
- 54: zweite Verbindungsleitung
- 56: zweiter Rückflussverhinderer
- 58: Trennwand
- 60: Gehäuse
- 62: erste Einlassöffnung
- 64: erste Auslassöffnung
- 66: zweite Einlassöffnung
- 68: zweite Auslassöffnung
- 70: erste Kammer
- 72: Bypassleitung
- 74: Wasserzähler
- 78: zweite Kammer
- 80: Trennwand
- 82: Gehäuse
- 84: Zahnrad
- 86: erste Einlassöffnung
- 88: erste Auslassöffnung
- 90: zweite Einlassöffnung
- 92: zweite Auslassöffnung
- 94: Wasserzähler

## Patentansprüche

1. Trink- und Brauchwassersystem mit
einem Anschluss an das öffentliche Wasserversorgungsnetz,
mindestens einer Verteilungsleitung (32),
einer in einer Wohneinheit vorgesehenen und mit der Verteilungsleitung (32) kommunizierenden Ringleitung (34), an die mindestens ein Verbraucher (36) angeschlossen ist,
einem der Wohneinheit zugeordneten Wasserzähler (74), und
einer Kopplungseinrichtung (42), die zwei starr miteinander gekoppelte Fördereinrichtungen (20, 22) aufweist, wobei der Wasserzähler (74) in einer Bypassleitung (72) angeordnet ist, welche zumindest eine der beiden Fördereinrichtungen (20, 22) überbrückt,
wobei eine erste Fördereinrichtung (20) in einem Abschnitt der Ringleitung (34), der in Strömungsrichtung vor dem Verbraucher (36) vorgesehen ist, und eine zweite Fördereinrichtung (22) in einem Abschnitt der Ringleitung (34), der in Strömungsrichtung hinter dem Verbraucher (36) vorgesehen ist, angeordnet sind, **dadurch gekennzeichnet,**
**dass** die erste Fördereinrichtung (20) und die zweite Fördereinrichtung (22) jeweils durch eine nach dem Verdrängerprinzip arbeitende Strömungsmaschine mit einem geschlossenen Volumen gebildet und antriebsgekoppelt sind.

2. Trink- und Brauchwassersystem nach Anspruch 1, **dadurch gekennzeichnet, dass** ein Fördervolumenstrom der zwei Fördereinrichtungen (20, 22) identisch ist.

3. Trink- und Brauchwassersystem nach Anspruch 2, **dadurch gekennzeichnet, dass** die zwei Fördereinrichtungen (20, 22) das gleiche Fördervolumen und die gleiche Drehzahl haben.

4. Trink- und Brauchwassersystem nach einem der Ansprüche 1 bis 3, **gekennzeichnet durch** eine Verbindungsleitung (52, 54), die einen in Strömungsrichtung vor dem Verbraucher (36) liegenden Bereich der Ringleitung (34) mit einem in Strömungsrichtung hinter dem Verbraucher (36) liegenden Bereich der Ringleitung (34) miteinander verbindet, wobei die beiden durch die Verbindungsleitung (52, 54) verbundenen Bereiche der Ringleitung (34) entweder zwischen der Kopplungseinrichtung (42) und dem Verbraucher (36) oder zwischen der Verteilungsleitung (32) und der Kopplungseinrichtung (42) vorgesehen sind und wobei in der Verbindungsleitung (52, 54) ein Rückflussverhinderer (53, 56) angeordnet ist, der einen strömungsmäßigen Kurzschluss einer Zirkulationsströmung der Ringleitung (34) verhindert.

5. Trink- und Brauchwassersystem nach einem der Ansprüche 1 bis 4, **dadurch gekennzeichnet, dass** die Fördereinrichtungen (20, 22) jeweils eine Zahnradpumpe aufweisen, die über eine gemeinsame Welle (24) starr miteinander gekoppelt sind.

6. Trink- und Brauchwassersystem nach einem der Ansprüche 1 bis 5, **dadurch gekennzeichnet, dass** die Kopplungseinrichtung drei in einer Ebene angeordnete und paarweise miteinander kämmende Zahnräder (84a, 84b, 84c) aufweist.

7. Trink- und Brauchwassersystem nach einem der Ansprüche 1 bis 6, **dadurch gekennzeichnet, dass** die Ringleitung (34) an einer Einfädelöffnung (40) der Verteilungsleitung (32) einerseits und an einer Ausfädelöffnung (38) der Verteilungsleitung (32) andererseits an die Verteilungsleitung (32) angeschlossen ist, wobei die Verteilungsleitung (32) und die Ringleitung (34) zwischen der Einfädelöffnung (40) und der Ausfädelöffnung (38) parallelgeschaltet sind, und wobei zwischen der Einfädelöffnung (40) und der Ausfädelöffnung (38) ein Strömungswiderstandselement angeordnet ist, das in durchströmtem Zustand eine Druckdifferenz zwischen der Einfädelöffnung (40) und Ausfädelöffnung (38) erzeugt und eine Durchströmung der Ringleitung (34) bewirkt.

## Claims

1. Drinking and service water system with
a connection to the public water supply network,
at least one distribution line (32),
a ring line (34) provided in a residential unit and communicating with the distribution line (32), to which at least one consumer (36) is connected,
a water meter (74) assigned to the residential unit, and
a coupling device (42) comprising two conveyance devices (20, 22) rigidly coupled to one another, wherein the water meter (74) is arranged in a bypass line (72) which bypasses at least one of the two conveyance devices (20, 22),
wherein a first conveying device (20) is arranged in a section of the ring line (34) which is provided upstream of the consumer (36) in the direction of flow, and a second conveying device (22) is arranged in a section of the ring line (34) which is provided downstream of the consumer (36) in the direction of flow, **characterized in that**
the first conveying device (20) and the second conveying device (22) are each formed by a fluid machine operating on the displacement principle with a closed volume and are drive-coupled.

2. Drinking and service water system according to claim 1, **characterized in that** a delivery volume flow of the two delivery devices (20, 22) is identical.

3. Drinking and service water system according to claim 2, **characterized in that** the two delivery devices (20, 22) have the same delivery volume and the same speed.

4. Drinking and service water system according to one of claims 1 to 3, **characterized by** a connecting line (52, 54) which connects a region of the ring line (34) located upstream of the consumer (36) in the direction of flow with a region of the ring line (34) located downstream of the consumer (36) in the direction of flow, wherein the two areas of the ring line (34) connected by the connecting line (52, 54) are provided either between the coupling device (42) and the consumer (36) or between the distribution line (32) and the coupling device (42) and wherein a backflow preventer (53, 56) is arranged in the connecting line (52, 54which prevents a flow short circuit of a circulation flow of the ring line (34).

5. Drinking and service water system according to one of claims 1 to 4, **characterized in that** the delivery devices (20, 22) each have a gear pump which are rigidly coupled to one another via a common shaft (24).

6. Drinking and service water system according to one of claims 1 to 5, **characterized in that** the coupling device has three gear wheels (84a, 84b, 84c) arranged in one plane and meshing with each other in pairs.

7. Drinking and service water system according to one of claims 1 to 6, **characterized in that** the ring line (34) is connected to the distribution line (32) at an entry opening (40) of the distribution line (32) on the one hand and at an exit opening (38) of the distribution line (32) on the other hand, wherein the distribution line (32) and the ring line (34) are connected in parallel between the entry opening (40) and the exit opening (38), and wherein a flow resistance element is arranged between the entry opening (40) and the exit opening (38), which, when flow is passing through, generates a pressure difference between the entry opening (40) and the exit opening (38) and causes flow through the ring line (34).

## Revendications

1. Système d'eau potable et d'eau sanitaire comprenant
un raccordement au réseau public de distribution d'eau,
au moins une conduite de distribution (32),
une conduite en anneau (34) fournie dans une unité d'habitation et communiquant avec la conduite de distribution (32) à laquelle est raccordé au moins un consommateur (36),
un compteur d'eau (74) associé à l'unité d'habitation, et
un dispositif de couplage (42) qui présente deux dispositifs de transport (20, 22) couplés l'un à l'autre de manière rigide, dans lequel le compteur d'eau (74) est agencé dans une conduite de dérivation (72) qui enjambe au moins un des deux dispositifs de transport (20, 22),
dans lequel un premier dispositif de transport (20) est agencé dans une partie de la conduite en anneau (34) qui est fournie en amont du consommateur (36) dans le sens d'écoulement et un deuxième dispositif de transport (22) est agencé dans une partie de la conduite en anneau (34) qui est fournie en aval du consommateur (36) dans le sens d'écoulement, **caractérisé en ce que**
le premier dispositif de transport (20) et le second dispositif de transport (22) sont formés respectivement par une turbomachine fonctionnant selon le principe du refoulement avec un volume fermé et sont couplés en entraînement.

2. Système d'eau potable et d'eau sanitaire selon la revendication 1, **caractérisé en ce qu'**un débit volumique de transport des deux dispositifs de transport (20, 22) est identique.

3. Système d'eau potable et d'eau sanitaire selon la revendication 2, **caractérisé en ce que** les deux dispositifs de transport (20, 22) présentent le même volume de transport et le même régime.

4. Système d'eau potable et d'eau sanitaire selon l'une quelconque des revendications 1 à 3, **caractérisé par** une conduite de liaison (52, 54) qui relie entre elles une région, située en amont du consommateur (36) dans le sens d'écoulement, de la conduite en anneau (34) à une région, située en aval du consommateur (36) dans le sens d'écoulement, de la conduite en anneau (34), dans lequel les deux régions de la conduite en anneau (34) reliées par la conduite de liaison (52, 54) sont fournies soit entre le dispositif de couplage (42) et le consommateur (36), soit entre la conduite de distribution (32) et le dispositif de couplage (42), et dans lequel un clapet anti-retour (53, 56), qui empêche un court-circuit d'écoulement d'un écoulement de circulation de la conduite en anneau (34), est agencé dans la conduite de liaison (52, 54).

5. Système d'eau potable et d'eau sanitaire selon l'une quelconque des revendications 1 à 4, **caractérisé en ce que** les dispositifs de transport (20, 22) présentent respectivement une pompe à engrenages, lesquelles sont couplées de manière rigide les unes aux autres par l'intermédiaire d'un arbre commun (24).

6. Système d'eau potable et d'eau sanitaire selon l'une quelconque des revendications 1 à 5, **caractérisé en ce que** le dispositif de couplage présente trois roues dentées (84a, 84b, 84c) agencées dans un plan et s'engrenant par paires.

7. Système d'eau potable et d'eau sanitaire selon l'une quelconque des revendications 1 à 6, **caractérisé en ce que** la conduite en anneau (34) est raccordée au niveau de la conduite de distribution (32) à un orifice d'enfilage (40) de la conduite de distribution (32) d'une part et à un orifice de désenfilage (38) de la conduite de distribution (32) d'autre part, dans lequel la conduite de distribution (32) et la conduite en anneau (34) sont connectées en parallèle entre l'orifice d'enfilage (40) et l'orifice de désenfilage (38), et dans lequel un élément de résistance à l'écoulement est agencé entre l'orifice d'enfilage (40) et l'orifice de désenfilage (38) et, dans un état d'écoulement, crée une différence de pression entre l'orifice d'enfilage (40) et l'orifice de désenfilage (38) et provoque un écoulement dans la conduite en anneau (34).
